# EUROPÄISCHE PATENTSCHRIFT

(11) **EP 1 027 243 B1**
(45) Veröffentlichungstag und Bekanntmachung des Hinweises auf die Patenterteilung: **12.07.2006**
(21) Anmeldenummer: 99924712.5
(22) Anmeldetag: 27.03.1999
(51) Int. Cl.: B60T 8/40

(54) **HYDRAULISCHE FAHRZEUGBREMSANLAGE**
HYDRAULIC BRAKING SYSTEM FOR AUTOMOBILES
SYSTEME DE FREINAGE HYDRAULIQUE POUR VEHICULE

(30) Priorität: 05.06.1998 DE 19825114
(43) Veröffentlichungstag der Anmeldung: 16.08.2000
(73) Patentinhaber: ROBERT BOSCH GMBH, 70442 Stuttgart (DE)
(72) Erfinder: WILLMANN, Karl-Heinz, D-71691 Freiberg (DE); BAUMANN, Dietmar, D-71696 Möglingen (DE); HAAS, Hardy, D-71706 Markgröningen (DE); SCHMIT, Stephane, F-54150 Briey (FR); VOLLERT, Herbert, D-74348 Lauffen (DE); REPPICH, Andreas, D-71229 Leonberg (DE)
(86) Internationale Anmeldenummer: PCT/DE1999/000939
(87) Internationale Veröffentlichungsnummer: WO 1999/064283

(56) Entgegenhaltungen:
- DE-A- 19 501 760
- US-A- 5 435 637
- US-A- 5 529 466
- PATENT ABSTRACTS OF JAPAN vol. 098, no. 008, 30. Juni 1998 (1998-06-30) -& JP 10 076926 A (AISIN SEIKI CO LTD), 24. März 1998 (1998-03-24)
- PATENT ABSTRACTS OF JAPAN vol. 098, no. 008, 30. Juni 1998 (1998-06-30) -& JP 10 081223 A (UNISIA JECS CORP), 31. März 1998 (1998-03-31)
- PATENT ABSTRACTS OF JAPAN vol. 017, no. 144 (M-1386), 23. März 1993 (1993-03-23) -& JP 04 317846 A (SUMITOMO ELECTRIC IND LTD), 9. November 1992 (1992-11-09)

## Beschreibung

### Stand der Technik

Die Erfindung betrifft eine hydraulische Fahrzeugbremsanlage gemäß der Gattung des Hauptanspruchs.

Eine derartige hydraulische Fahrzeugbremsanlage ist bekannt aus der DE 195 01 760 A1. Die bekannte Fahrzeugbremsanlage weist einen Hauptbremszylinder, mehrere Radbremszylinder und eine Hydropumpe auf, mit der Bremsflüssigkeit vom Hauptbremszylinder zu den Radbremszylindern förderbar ist. Die Hydropumpe dient zur hydraulischen Bremskraftverstärkung. Sie ist ebenso zur Blockierschutz-, zur Antriebsschlupf- und zur Fahrdynamikregelung verwendbar, wobei zur Druckabsenkung in den Radbremszylindern über Ventile die Saugseite der Hydropumpe mit den Radbremszylindern und die Druckseite der Hydropumpe mit dem Hauptbremszylinder verbindbar ist. Es ist an sich üblich, die Hydropumpen derartiger Fahrzeugbremsanlagen als Zweikolbenpumpen mit in Boxeranordnung einander gegenüberliegenden Kolben auszubilden, die von einem gemeinsamen, zwischen den beiden Kolben angeordneten Exzenter angetrieben werden. Die beiden Kolben arbeiten gegenphasig, d. h. während einer der beiden Kolben einen Förderhub ausführt, führt der andere Kolben einen Rückhub aus. Mit Förderhub ist der Hub bezeichnet, bei dem der Kolben das Volumen eines Verdrängungsraums in einem Zylinder der Kolbenpumpe verkleinert und dadurch Fluid aus der Kolbenpumpe verdrängt. Beim Rückhub wird das Volumen des Verdrängungsraums wieder vergrößert, dieser Hub wird vielfach auch als Saughub bezeichnet. Aufgrund ihrer oszillierenden Arbeitsweise haben Kolbenpumpen einen oszillierenden Ansaugvolumenstrom und verursachen Druckpulsationen auf der Saugseite, die auf den Hauptbremszylinder rückwirken und an einem Fußbremspedal unangenehm spürbar sind und ein gut hörbares Geräusch verursachen. Beides ist unerwünscht, insbesondere wenn die Hydropumpe zur hydraulischen Bremskraftverstärkung verwendet, d.h. bei jeder Bremsung in Betrieb genommen wird. Aber auch bei der Blockierschutz-, der Antriebsschlupf- und der Fahrdynamikregelung, die nur in außergewöhnlichen Fahrsituationen aktiv sind, ist es zumindest wünschenswert, die Druckpulsationen zu verringern. Auch ist es bekannt, die Kolben der Kolbenpumpen als Stufenkolben auszubilden, die den Vorteil haben, sowohl während des Förderhubs als auch während des Rückhubs Bremsflüssigkeit anzusaugen. Ein Stufenkolben hat gegenüber einem Einfachkolben den Vorteil eines gleichmäßigeren Ansaugvotumenstroms mit verringerter Amplitude und doppelter Frequenz.

Aus der US-A-5,529,466 ist eine Mehrkolbenpumpe aus zwei Hydropumpen mit Stufenkolben vorbekannt. In jeden Stufenkolben ist ein Ventil integriert. Bei diesem integrierten Ventil handelt es sich um das Auslassventil der Hydropumpe. Deren Einlassventil ist ortfest im Pumpengehäuse angeordnet und folgt dementsprechend der Hubbewegung des Stufenkolbens nicht. Diese Anordnung des Ein- und Auslassventils wirkt sich darin aus, dass die bekannte Hydropumpe permanent, also in beiden Hubrichtungen des Stufenkolbens fördert und nur in einer Hubrichtung des Stufenkolbens ansaugt. Damit dämpfen diese Hydropumpen Pulsationen auf der Druckseite, jedoch nicht auf der Saugseite. Mit anderen Worten sind die beim Betrieb dieser bekannten Hydropumpen auftretenden Pulsationen auf der Saugseite der Mehrkolbenpumpe unverändert stark an dem, saugseitig über den Hauptbremszylinder angekoppelten, Fußbremspedal spürbar.

Aus der US-A-5,435,637 ist eine hydraulische Fahrzeugbremsanlagen mit einem Hauptbremszylinder, einem Radbremszylinder und einer Mehrkolbenpumpe bekannt, deren einzelnen Hydropumpen phasenversetzt angetrieben sind. Die Kolben dieser Hydropumpen sind als Einfachkolben ausgebildet. Die Einlassventile dieser Hydropumpen sind im Pumpengehäuse angeordnet.

### Vorteile der Erfindung

Die erfindungsgemäße hydraulische Fahrzeugbremsanlage mit den Merkmalen des Anspruchs 1 weist eine Mehrkolbenpumpe mit einer geraden Anzahl an Stufenkolben auf. Die Stufenkolben werden phasenversetzt, jedoch nicht gegenphasig, also nicht mit einem Phasenwinkel von Π, angetrieben. Die Stufenkolben der erfindungsgemäßen Fahrzeugbremsanlage erreichen ihre Totpunkte also nacheinander. Das Ansaugen der Stufenkolben aus dem Hauptbremszylinder erfolgt also zeitversetzt, wobei sich die Ansaugvolumenströme der verschiedenen Stufenkolben teilweise überschneiden. Dies hat den Vorteil, dass der gesamte Ansaugvolumenstrom der Mehrkolbenpumpe, also die Summe der Ansaugvolumenströme aller Stufenkolben; gleichmäßiger ist; die Einzelansaugvolumenströme überlagern einander, der Gesamtvolumenstrom schwankt mit verringerter Amplitude um einen Mittelwert. Die Größe der Druckpulsationen auf der Saugseite der Kolbenpumpe, die auf den Hauptbremszylinder rückwirken, sind verringert. Dabei ist es von der Saugseite her gesehen egal, ob aufeinander folgende Stufenkolben nacheinander ihre oberen Totpunkte und dann nacheinander ihre unteren Totpunkte erreichen, oder ob bei aufeinanderfolgenden Stufenkolben ein vorangehender Stufenkolben den oberen und ein nachfolgender Stufenkolben den unteren Totpunkt erreicht und umgekehrt. Dies gilt jedenfalls, wenn die Ansaugvolumenströme beim Förderhub und beim Rückhub in etwa gleich groß sind. Für die Druckseite ergibt sich eine Vergleichmäßigung des Volumenstroms, wenn bei einer Mehrkolbenpumpe mit einer geraden Anzahl von vier und mehr Stufenkolben die aufeinanderfolgenden Stufenkolben abwechselnd den oberen und der nachfolgende Stufenkolben den unteren Totpunkt erreicht.

Die Erfindung ist insbesondere für hydraulische Fahrzeugbremsanlagen mit elektrohydraulischer Bremskraftverstärkung, also bei Fahrzeugbremsanlagen, bei denen ein im Hauptbremszylinder aufgebauter Bremsdruck mit der Mehrkolbenpumpe erhöht wird, oder für elektrohydraulische Fahrzeugbremsanlagen, bei denen der Bremsdruck nur im Fehlerfall mit dem Hauptbremszylinder, im Normalfall jedoch nicht mit dem Hauptbremszylinder, sondern ausschließfich mit der Mehrkolbenpumpe erzeugt wird, vorgesehen, da bei diesen Fahrzeugbremsanlagen die Mehrkolbenpumpe bei jeder Bremsung betätigt und Ihre Rückwirkung auf den Hauptbremszylinder spürbar sind. Aber auch für andere hydraulische Fahrzeugbremsanlagen mit einer Hydropumpe beispielsweise zur Blockierschutz-, zur Antriebsschlupf- undioder zur Fahrdynamikregelung ist die Erfindung vorteilhaft, auch wenn bei solchen Fahrzeugbremsanlagen die Mehrkolbenpumpe beim herkömmlichen Bremsen ohne Schlupf an den Fahrzeugrädern nicht in Betrieb gesetzt und die Vorteile der Erfindung nur ausnahmsweise beim Einsetzen der Blockierschutz-, der Antriebsschlupf- oder der Fahrdynamikregelung zu Tage treten.

Unter Mehrkolbenpumpe im Sinne der Erfindung sollen auch mehre voneinander unabhängige Kolbenpumpen verstanden werden, die beispielsweise elektronisch oder mechanisch beispielsweise über Zahnräder miteinander synchronisiert sind. Es können also beispielsweise zwei miteinander synchronisierte Kolbenpumpen für die beiden Bremskreise einer Zweikreis-Fahrzeugbremsanlage sein. Als Bauformen kommen beispielsweise Sternanordnungen der Stufenkolben um einen gemeinsamen Exzenter herum, auch mehrere Sterne hintereinander, Reihen-, V- oder Boxer-Anordnungen der Stufenkolben mit einer Exzenter-, Nocken- oder Kurbelwelle zum synchronen, phasenversetzten Antrieb der Stufenkolben in Betracht.

Die Unteransprüche haben vorteilhafte Ausgestaltungen und Weiterbildungen der im Hauptanspruch angegebenen Erfindung zum Gegenstand.

Die Stufenkolben der Mehrkolbenpumpe haben gemäß Anspruch 2 eine Phasenverschiebung von etwa π dividiert durch die Anzahl der Stufenkolben oder auch einem Vielfachen davon, nicht jedoch eine Phasenverschiebung von π, denn dies wäre gegenphasig, es würde stets ein Stufenkolbe den Förderhub und gleichzeitig ein dazu gegenphasiger Kolben den Rückhub ausführen, womit die beiden gegenphasigen Kolben, da sie sowohl während des Förderhubs als auch während des Rückhubs ansaugen, gleichzeitig ansaugen würden. Es käme nicht zu einer Verringerung der Pulsationder durch die Überlagerung der Ansaugvolumenströme, sondern im Gegenteil zu einer Addition und damit zu einer Verstärkung der Pulsation. Durch die Phasenverschiebung von π dividiert durch die Anzahl der Stufenkolben ergibt sich eine gleichmäßige, zeitliche Verteilung der Ansaugvolumenströme der Stufenkolben. Abweichungen von dieser Phasenverschiebung können beispielsweise aus Gründen der raumsparenden Unterbringung der Stufenkolben in einem Pumpengehäuse zweckmäßig sein.

Gemäß Anspruch 3 kann die erfindungsgemäße Fahrzeugbremsanlage als Einkreis-Bremsanlage mit einer mindestens zwei Stufenkolben, die den einen Bremskreis beaufschlagen, aufweisenden Mehrkolbenpumpe ausgebildet sein.

Auch ist es gemäß Anspruch 4 möglich, die erfindungsgemäße Fahrzeugbremsanlage als Mehrkeis-, beispielsweise als Zweikreisbremsanlage, mit mindestens einem Stufenkolben für jede Bremskreis auszubilden. Die auf der Saugseite der Mehrkolbenpumpe in jedem Bremskreis stattfindenden Druckpulsationen kompensieren sich in einem gemeinsamen Hauptbremszylinder. Vorzugsweise erfolgt ein zumindest teilweiser Druckausgleich zwischen den Bremskreisen (Anspruch 5) beispielsweise durch einen einen Schwimmkolben aufweisenden Hauptbremszylinder (Anspruch 6).

Gemäß Anspruch 7 ist vorgesehen, daß die Stufenkolben beim Förderhub ein in etwa ebenso großes Saugvolumen wie beim Rückhub aufweisen, d. h. die Stufenkolben haben an einem infolge der Kolbenstufe verjüngten Ende eine in etwas halb so große Querschnittsfläche wie an ihrem anderen Ende.

### Zeichnung

Die Erfindung wird nachfolgend anhand zweier in der Zeichnung dargestellter Ausführungsbeispiele näher erläutert. Es zeigen:
- Figur 1: einen hydraulischen Schaltplan einer erfindungsgemäßen Fahrzeugbremsanlage;
- Figur 2: eine schematische Darstellung einer Zweikolbenpumpe der in Figur 1 dargestellten Fahrzeugbremsanlage;
- Figuren 3a bis 3d: Weg-, Geschwindigkeits- und Volumenstromdiagramme für die Zweikolbenpumpe aus Figur 2; und
- Figur 4: eine schematische Darstellung einer Sechskolbenpumpe der in Figur 1 dargestellten Fahrzeugbremsanlage.

### Beschreibung der Ausführungsbeispiele

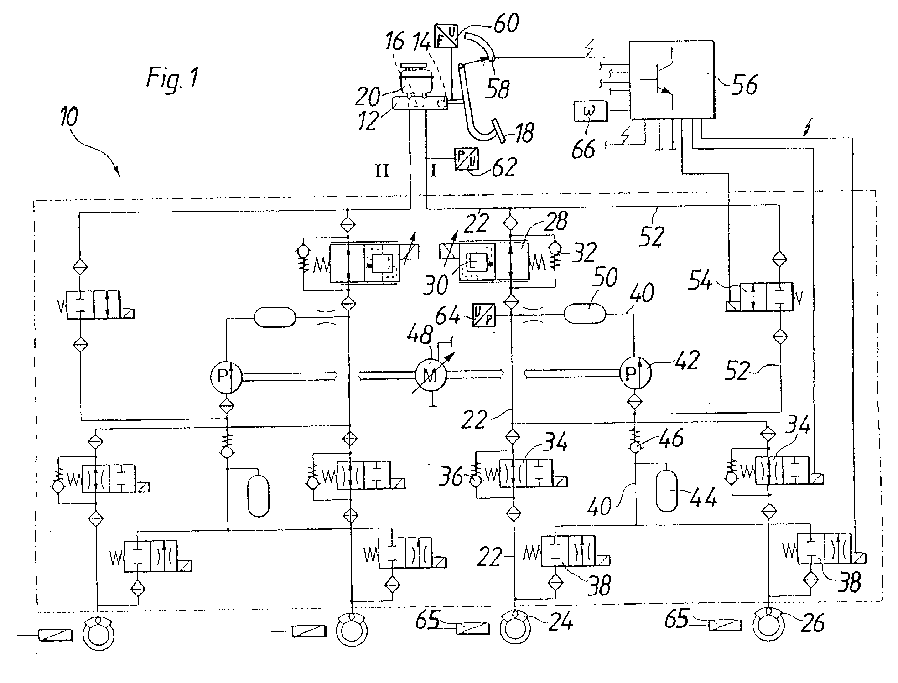

Die in Figur 1 dargestellte, erfindungsgemäße, hydraulische Fahrzeugbremsanlage 10 ist als Zweikreis-Bremsanlage mit zwei voneinander unabhängigen Bremskreisen I, II ausgebildet. Die Bremskreise I, II sind an einen Zweikreis-Hauptbremszylinder 12 angeschlossen, der in an sich bekannter Weise einen Stangenkolben 14 und einen Schwimmkolben 16 aufweist, die mit Strichlinien angedeutet sind. Der Stangenkolben 14 wird unmittelbar mit einem Fußbremspedal 18 betätigt, der Schwimmkolben 16 wird mit dem vom Stangenkolben 14 erzeugten Druck beaufschlagt und erzeugt dadurch ebenfalls einen Bremsdruck im zweiten Bremskreis II. Des weiteren weist der Hauptbremszylinder 12 einen Bremsflüssigkeitsvorratsbehälter 20 auf.

Die beiden Bremskreise I, II sind übereinstimmend aufgebaut und funktionieren in gleicher Weise. Die beiden Bremskreise I, II werden nachfolgend anhand des in Figur 1 rechts dargestellten Bremskreises I erläutert. Vom Hauptbremszylinder 12 führt eine Hauptbremsleitung 22 zu zwei an den Bremskreis I angeschlossenen Radbremszylindern 24, 26. In der Hauptbremsleitung 22 ist ein Umschaltventil 28 angeordnet. Das Umschaltventil 28 ist als in seiner Grundstellung offenes 2/2-Wege-Proportional-Magnetventil ausgebildet. In das Umschaltventil 28 ist ein Differenzdruckventil 30 integriert, das einen Überdruck in den Radbrernszylindern 24, 26 begrenzt. Dem Umschaltventil 28 ist ein in Richtung zu den Radbremszylindern 24, 26 durchströmbares Rückschlagventil 32 parallel geschaltet.

Auf einer Radbremszylinderseite des Umschaltventils 28 verzweigt sich die Hauptbremsleitung 22 zu den beiden Radbremszylindern 24, 26. Jeder Radbremszylinder 24, 26 ist über ein Bremsdruckaufbauventil 34, dem ein in Richtung des Hauptbremszylinders 12 durchströmbares Rückschlagventil 36 parallel geschaltet ist, an das Umschaltventil 28 und über dieses an den Hauptbremszylinder 12 angeschlossen. Des weiteren ist jedem Radbremszylinder 24, 26 ein Bremsdruckabsenkventil 38 zugeordnet, von denen eine gemeinsame Rückleitung 40 zur Saugseite einer Hydropumpe 42 führt. Das Bremsdruckaufbauventil 34 und das Bremsdruckabsenkventil 38 bilden eine Bremsdruckmodulationsventilanordnung des zugeordneten Radbremszylinders 24, 26. Die Bremsdruckaufbauventile 34 und die Bremsdruckabsenkventile 38 sind 2/2-Wege-Magnetventile, wobei die Bremsdruckaufbauventile 34 in ihrer Grundstellung offen und die Bremsdruckabsenkventile 38 in ihrer Grundstellung geschlossen sind.

An die Rückleitung 40 ist ein Hydrospeicher 44 angeschlossen, ein in Richtung der Hydropumpe 42 durchströmbares Rückschlagventil 46 ist auf der Saugseite der Hydropumpe 42 in der Rückleitung 40 angeordnet. Die Hydropumpen 42 beider Bremskreise I, II werden von einem gemeinsamen, drehzahlsteuerbaren Elektro-Pumpenmotor 48 angetrieben.

Von einer Druckseite der Hydropumpe 42 führt die Rückleitung 40 zur Hauptbremsleitung 22, in die sie zwischen dem Umschaltventil 28 und den Bremsdruckaufbauventilen 34 mündet. In der Rückleitung 40 ist auf der Druckseite der Hydropumpe 42 eine Dämpferkammer 50 angeordnet.

Zwischen dem Hauptbremszylinder 12 und dem Umschaltventil 28 zweigt eine Ansaugleitung 52 von der Hauptbremsleitung 22 ab, an die die Saugseite der Rückförderpumpe 42 angeschlossen ist. In der Ansaugleitung 52 ist ein Ansaugventil 54 angeordnet, das als in seiner Grundstellung geschlossenes 2/2-Wege-Magnetventil ausgebildet ist.

Zur Bremsregelung weist die erfindungsgemäße Fahrzeugbremsanlage 10 ein elektronisches Steuergerät 56 auf, das den Pumpenmotor 48 und die Magnetventile 28, 34, 38, 54 steuert. Die Fahrzeugbremsanlage 10 weist eine elektrohydraulische Bremskraftverstärkung auf. Das Fußbremspedal 18 und/oder der Hauptbremszylinder 12 dienen als Bremsdrucksollwertgeber für einen in den Radbremszylindern 24, 26 zu erzeugenden Radbremsdruck. Der Bremsdrucksollwert wird gemessen mittels eines Pedalwegsensors 58, der einen Weg oder Winkel mißt, um den das Fußbremspedal 18 niedergetreten wird, mittels eines Pedalkraftsensors 60, mit dem eine Pedalkraft gemessen wird, mit der das Fußbremspedal 18 niedergetreten wird, oder mittels eines an den Hauptbremszylinder 12 angeschlossenen Bremsdrucksensors 62, mit dem ein Bremsflüssigkeitsdruck in einer der Kammern des Hauptbremszylinders 12 gemessen wird. Es ist nur einer der Sensoren 58, 60, 62 erforderlich. Ein Signal der Sensoren 58, 60, 62 wird dem elektronischen Steuergerät 56 zugeleitet, das bei Betätigung des Fußbremspedals 18 das Umschaltventil 28 schließt, das Ansaugventil 54 öffnet und die Hydropumpe 42 in Gang setzt. Die Hydropumpe 42 saugt durch das geöffnete Ansaugventil 54 Bremsflüssigkeit aus dem Hauptbremszylinder 12 an und fördert die Bremsflüssigkeit durch die geöffneten Bremsdruckaufbauventile 34 in die Radbremszylinder 24, 26. Der Radbremsdruck wird mit einem Drucksensor 64 gemessen, der zwischen den Bremsdruckaufbauventilen 34 und dem Umschaltventil 28 an die Hauptbremsleitung 22 angeschlossen ist. Die Regelung/Erhöhung des Radbremszylinderdrucks auf einen von der Bremspedalbetätigung abhängigen Wert erfolgt über die Drehzahl des Pumpenmotors 48 einerseits. Andererseits Ist der Radbremsdruck auch über das Umschaltventil 28, die Bremsdruckaufbauventile 34, die Bremsdruckabsenkventile 38 und das Ansaugventil 54 steuer- oder regelbar.

Des weiteren weist die erfindungsgemäße Fahrzeugbremsanlage 10 eine Bremsblockierschutz-, eine Antriebsschlupf- und eine Fahrdynamikregeleinrichtung auf. Für die Bremsblockierschutz- und die Antriebsschlupfregelung ist jedem bremsbaren Fahrzeugrad ein Raddrehsensor 65 zugeordnet, der ein Signalfolgen an das elektronische Steuergerät 56 liefert. Für die Fahrdynamikregelung weist die Fahrzeugbremsanlage 10 ein Gyroskop 66 auf, das eine Drehgeschwindigkeit des Fahrzeugs um dessen Hochachse mißt und ein Signal an das elektronische Steuergerät 56 liefert. Zur Antriebsschlupf- und zur Fahrdynamikregelung wird das Umschaltventil 28 geschlossen, das Ansaugventil 54 geöffnet und die Hydropumpe 42 in Gang gesetzt. Die Regelung des Radbremsdrucks erfolgt individuell für jeden Radbremszylinder 24, 26 in an sich bekannter Weise durch Bremsdruckmodulation mittels des Bremsdruckaufbauventils 34 und des Bremsdruckabsenkventils 38.

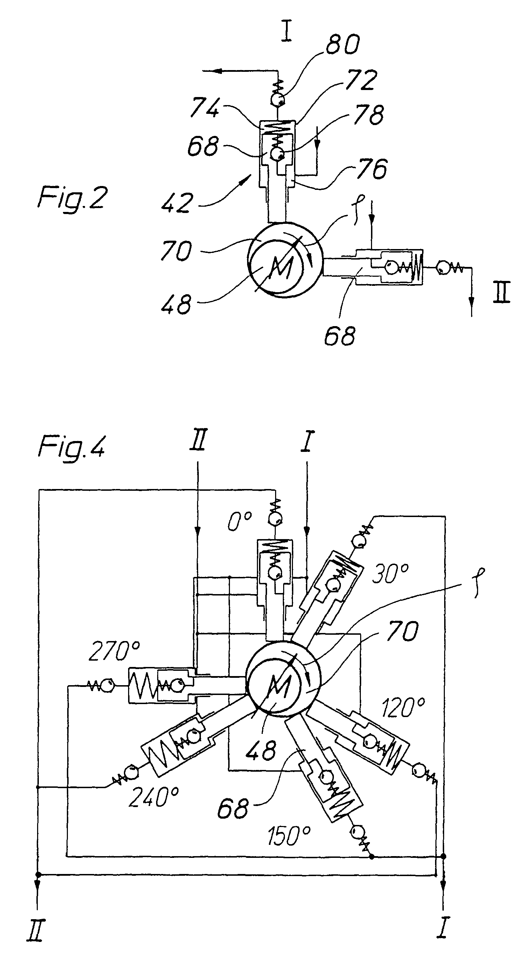

Ein den gemeinsamen Pumpenmotor 48 und die beiden Hydropumpen 42 der beiden Bremskreise I, II umfassendes Pumpenaggregat ist in Figur 2 schematisiert und vereinfacht dargestellt. Es handelt sich um eine zwei Stufenkolben 68 aufweisende Zweikolbenpumpe 42, deren beide Stufenkolben 68 von einem Exzenterelement 70 angetrieben werden, das mit dem Pumpenmotor 48 antreibbar ist. Jedem Bremskreis I, II ist ein Stufenkolben 68 zugeordnet, der zusammen mit seinem Zylinder 72 die Hydropumpe 42 des jeweiligen Bremskreises I, II bildet.

Eine Stufenkolben 68 aufweisende Hydropumpen 42 ist bekannt beispielsweise aus der DE 44 07 978 A1, auf die hinsichtlich des möglichen Aufbaus und der Funktion von Stufenkolbenpumpne verwiesen wird. Der Stufenkolben 68 ist auf einer einem Verdrängungsraum 74 der Hydropumpe 42 zugewandten Ende auf einem größeren Durchmesser im Zylinder 72 geführt als auf einer dem Exzenterelement 70 zugewandten Seite. Durch den Stufenkolben 68 ist ein Ringraum 76 im Zylinder 72 gebildet, durch den die Hydropumpe 42 ansaugt. Ein Einlaßventil 78 ist in den Kolben 68 integriert, ein Auslaßventil 80 ist an den Verdrängungsraum 74 angeschlossen. Das Einlaßventil 78 und das Auslaßventil 80 sind als Rückschlagventile ausgebildet.

Der Kolbenweg (Kolbenhub) s und die Kolbengeschwindigkeit v sind in Figur 3a über dem Drehwinkel ϕ des Exzenterelements 70 aufgetragen, wobei sich der Stufenkolben 68 bei ϕ = 0 und ϕ = 2π am unteren Totpunkt (UT), d. h. an seiner am weitesten aus dem Zylinder 72 heraus verschobenen Stellung, und bei einem Winkel von ϕ = π am oberen Totpunkt (OT), d. h. in seiner am weitesten in den Zylinder 72 hineinverschobenen Stellung befindet.

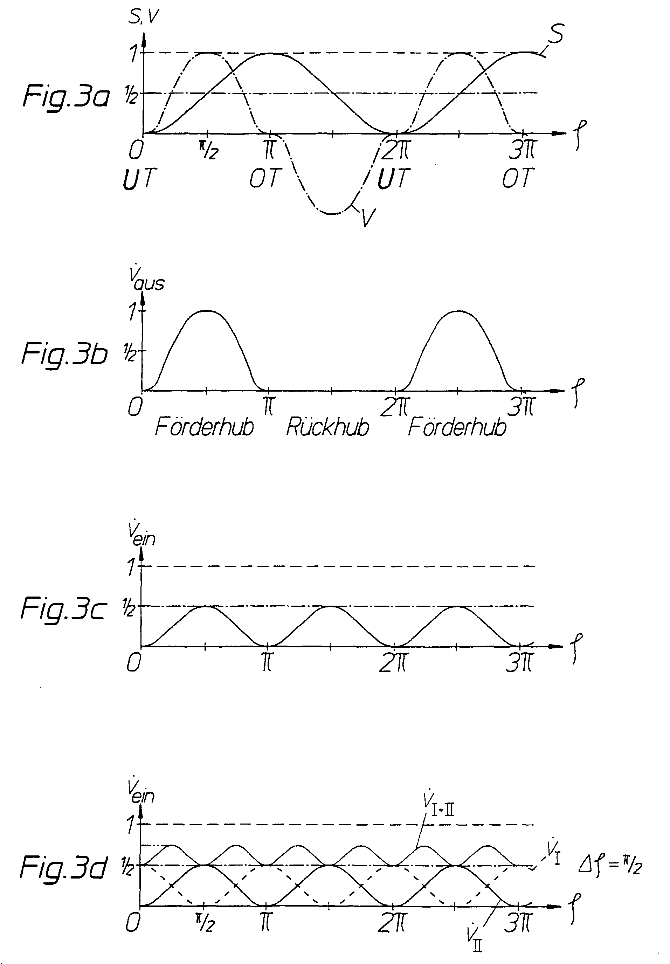

Durch die hin- und hergehende Hubbewegung des Stufenkolbens 68 ergibt sich ein pulsierender Bremsflüssigkeits-Volumenstrom Vₐᵤₛ (Fig. 3b)auf der Druckseite der Hydropumpe 42, der während eines Förderhubs des Stufenkolbens 68 vom unteren Totpunkt (ϕ = 0) zum oberen Totpunkt (ϕ = π) sinusförmig wie die Kolbengeschwindigkeit v verläuft. Während eines Rückhubs vom oberen Totpunkt (ϕ = π) zum unteren Totpunkt (ϕ =2π) ist der Volumenstrom auf der Druckseite der Hydropumpe 42 null.

Auf der Saugseite ergibt sich ein anderer Verlauf des Bremsflüssigkeits-Volumenstroms Vₑᵢₙ, wie er in Figur 3c dargestellt ist. Während des Förderhubs vom unteren Totpunkt zum oberen Totpunkt ist das in den Stufenkolben 68 integrierte Einlaßventil 78 geschlossen, der Ringraum 76 auf der Saugseite der Hydropumpe 42 ist vom Verdrängungsraum 74 getrennt. Durch die Verschiebung des Stufenkolbens 68 in den Zylinder 72 hinein vergrößert sich der Ringraum 76, die Hydropumpe 42 saugt Bremsflüssigkeit an. Beim Rückhub vom oberen Totpunkt zum unteren Totpunkt verkleinert sich zwar das Volumen des Ringraums 76, gleichzeitig vergrößert sich das Volumen des Verdrängungsraums 74. Da eine Querschnittsfläche des Verdrängungsraums 74 größer als diejenige des Ringraums 76 ist, ergibt sich insgesamt eine Volumenvergrößerung auch während des Rückhubs des Stufenkolbens 68, so daß die Hydropumpe 42 auch während des Rückhubs durch das jetzt geöffnete Einlaßventil 78 Bremsflüssigkeit in den Verdrängungsraum 74 ansaugt. Insgesamt ergibt sich der in Figur 3c dargestellte, sinusförmige Verlauf des Ansaugvolumenstroms sowohl während des Förderhubs als auch während des Rückhubs. Der Ansaugvolumenstrom ist lediglich an den Totpunkten des Stufenkolbens 68 null, während der Kolbenbewegung zwischen den Totpunkten wird stets Bremsflüssigkeit angesaugt. Die Amplitude des Ansaugvolumenstroms während des Förderhubs im Verhältnis zum Rückhub ist abhängig von den Querschnittsflächen des Stufenkolbens 68 an dessen durchmessergrößerem und durchmesserkleinerem Ende. Vorzugsweise ist die Querschnittsfläche des Stufenkolbens 68 an seinem durchmesserkleineren Ende halb so groß wie an seinem durchmessergrößeren Ende, so daß die Querschnittsfläche des Ringraums 76 halb so groß wie die des Verdrängungsraums 74 ist, was gleich große Ansaugvolumenströme während des Förderhubs wie auch während des Rückhubs ergibt. Das gesamte Ansaugvolumen während einer vollen Umdrehung des Exzenterelements 70 ist so groß wie das gesamte Ausströmvolumen. Die Diagramme der Figuren 3a bis 3d sind jeweils auf den Wert 1 normiert, sie sind schematisch zu verstehen und geben nicht unbedingt den tatsächlichen Verlauf und Wert der angegebenen Größen wieder. Sie sollen lediglich dem Verständnis der Erfindung dienen.

Die beiden Stufenkolben 68 der in Figur 2 dargestellten Zweikolbenpumpe werden mit einer Phasenverschiebung von Δϕ = π/2 angetrieben. Für diese Phasenverschiebung müssen die Stufenkolben 68 nicht wie in Figur 2 dargestellt, in einer 90° V-Anordnung untergebracht sein, die Stufenkolben 68 können beispielsweise auch in einer Reihenanordnung vorgesehen sein und von um 90° zu einander versetzten Exzenterelementen angetrieben werden (nicht dargestellt). Die Ansaugvolumenströme V_{I}, V_{II} der beiden Stufenkolben 68 sind um π/2 versetzt, es ergibt sich der in Figur 3d dargestellte Verlauf. Die Addition der beiden Ansaugvolumenströme V_{I+II} ergibt eine Druckpulsation um einen angehobenen Mittelwert mit erheblich verringerter Amplitude. Da der Schwimmkolben 16 des Hauptbremszylinders 12 einen Druckausgleich zwischen den Bremskreisen I, II bewirkt, ist die Rückwirkung auf das Fußbremspedal 18 durch die Phasenverschiebung des Antriebs der Stufenkolben 68 von π/2 erheblich verringert.

Figur 4 zeigt eine Sechskolbenpumpe mit sternförmig angeordneten Stufenkolben 68, die bei einer abgewandelten Ausführungsform der erfindungsgemäßen Fahrzeugbremsanlage 10 anstelle der in Figur 2 dargestellten Zweikolbenpumpe vorgesehen ist. Die Sechskolbenpumpe aus Figur 4 ist prinzipiell ebenso aufgebaut wie die in Figur 2 dargestellte Zweikolbenpumpe es wird insoweit auf die Ausführungen zu Figur 2 verwiesen, für gleiche Bauteile werden gleiche Bezugszahlen verwendet. Die sechs Stufenkoben 68 sind sternförmig um das mit dem Pumpenmotor 48 rotierend antreibare Exzenterelement 70 angeordnet, wobei die Stufenkolben 68 in einem Winkel 0°, 30°, 120°, 150°, 240° und 270° angeordnet sind. Die Stufenkolben 68 haben also abwechselnd eine Phasenverschiebung von 30° und 90°. Je drei um 120° zueinander versetzte Stufenkolben 68 sind einander hydraulisch parallel geschaltet und einem Bremskreis I zugeordnet, sie bilden die Hydropumpe 42 dieses Bremskreises. Die anderen drei Stufenkolben 68, die untereinander ebenfalls jeweils um 120° zu einander versetzt und zu den anderen drei Stufenkolben um 30° versetzt sind, sind ebenfalls einander hydraulisch parallel geschaltet und bilden die Hydropumpe 42 des anderen Bremskreises II. Die Sechskolbenpumpe der Figur 4 weist somit zwei Hydropumpen 42 auf, wobei die drei Stufenkolben 68 einer Hydropumpe untereinander um 120° versetzt und zu den Stufenkolben 68 der anderen Hydropumpe nochmals um 30° versetzt sind.

Durch die Phasenverschiebung der sechs Stufenkolben 68 von 30° und 90° ergibt sich prinzipiell derselbe Kompensationseffekt der Druckpulsationen an den Saugseiten der Stufenkolben 68 wie bei der in Figur 2 dargestellten Zweikolbenpumpe, der Gesamt-Ansaugvolumenstrom, also die Summe aller sechs Ansaugvolumenströme weist eine erheblich verringert Schwankungsamplitude auf als bei einer Sechskolbenpumpe mit gleichmäßig um jeweils 60° zueinander versetzten Stufenkolben. Der Verlauf der sechs Ansaugvolumenströme ist nicht dargestellt, da eine Darstellung von sechs Volumenströmen eher verwirrend als klarstellend wäre. Durch die Verwendung von Stufenkolben 68 und deren Anordnung abwechselnd um 30° und 90° zueinander versetzt sind die Ansaugvolumenströme gleichmäßig um jeweils 30° phasenverschoben. Bei einer gleichmäßig verteilten Anordnung der Stufenkolben 68 um jeweils 60° versetzt würden die Ansaugvolumenströme einander gegenüberliegender Stufenkolben gleichphasig ohne Phasenverschiebung zueinander verlaufen, es würden sich in der Summe drei Ansaugvolumenströme mit einem Phasenversatz von 120° und der doppelten Amplitude wie die sechs Ansaugvolumenströme der in Figur 4 dargestellten Sechskolbenpumpe, ergeben.

## Patentansprüche

1. Hydraulische Fahrzeugbremsanlage mit einem Hauptbremszylinder, mit einem Radbremszylinder und mit einer aus einer geraden Anzahl von Hydropumpen aufgebauten Mehrkolbenpumpe, deren Saugseite an den Hauptbremszylinder angeschlossen ist und mit deren Druckseite der Radbremszylinder verbunden ist,
**dadurch gekennzeichnet, dass**
die Hydropumpen jeweils einen Stufenkolben (68) aufweisen, dass in den Stufenkolben (68) ein Einlassventil (78) der Hydropumpe integriert ist, dass ein Auslassventil (80) der Hydropumpe an einen Verdrängungsraum (74) angeschlossen ist und dass ein Antrieb der Stufenkolben (68) der Mehrkolbenpumpe (42) phasenversetzt, jedoch nicht gegenphasig erfolgt.

2. Hydraulische Fahrzeugbremsanlage nach Anspruch 1, **dadurch gekennzeichnet, daß** der Antrieb der Stufenkolben (68) mit einer Phasenverschiebung von etwa π dividiert durch die Anzahl der Stufenkolben (68) oder einem Vielfachen davon, jedoch nicht mit einer Phasenverschiebung von π, erfolgt.

3. Hydraulische Fahrzeugbremsanlage nach Anspruch 1 oder 2, **dadurch gekennzeichnet, daß** die Fahrzeugbremsanlage eine Einkreis-Bremsanlage mit einer mindestens zwei Stufenkolben (68) aufweisenden Mehrkolbenpumpe (42) ist.

4. Hydraulische Fahrzeugbremsanlage nach Anspruch 1 oder 2, **dadurch gekennzeichnet, daß** die Fahrzeugbremsanlage (10) eine Mehrkreis-Bremsanlage mit einer mindestens einen Stufenkolben (68) für jeden Bremskreis (I, II) aufweisenden Mehrkolbenpumpe (42) ist.

5. Hydraulische Fahrzeugbremsanlage nach Anspruch 4, **dadurch gekennzeichnet, daß** die Bremskreise (I, II) einen Druckausgleich (16) aufweisen.

6. Hydraulische Fahrzeugbremsanlage nach Anspruch 5, **dadurch gekennzeichnet, daß** die Bremskreise (I, II) an einen Mehrkreis-Hauptbremszylinder (12) angeschlossen sind, der mindestens einen Schwimmkolben (16) aufweist.

7. Hydraulische Fahrzeugbremsanlage nach einem der Ansprüche 1 bis 6, **dadurch gekennzeichnet, daß** die Stufenkolben (68) bei einem Förderhub ein in etwa gleiches Saugvolumen wie bei einem Rückhub aufweisen.

8. Hydraulische Fahrzeugbremsanlage nach Anspruch 4, **dadurch gekennzeichnet, daß** aufeinanderfolgende Stufenkolben (68) der Mehrkolbenpumpe (42) an verschiedene Bremskreise (I, II) angeschlossen sind.

9. Hydraulische Fahrzeugbremsanlage nach einem der vorhergehenden Ansprüche, **dadurch gekennzeichnet, daß** die Fahrzeugbremsanlage (10) ein Umschaltventil (28) aufweist, über das die Druckseite der Mehrkolbenpumpe (42) mit dem Hauptbremszylinder (12) verbunden ist.

10. Hydraulische Fahrzeugbremsanlage nach einem der vorhergehenden Ansprüche, **dadurch gekennzeichnet, daß** die Fahrzeugbremsanlage (10) ein Ansaugventil (54) aufweist, das der Saugseite der Mehrkolbenpumpe (42) und dem Hauptbremszylinder (12) zwischengeschaltet ist.

11. Hydraulische Fahrzeugbremsanlage nach einem der vorhergehenden Ansprüche, **dadurch gekennzeichnet, daß** die Fahrzeugbremsanlage (10) eine Bremsdruckmodulationsventilanordnung (34, 38) aufweist.

## Claims

1. Hydraulic vehicle brake system having a main brake cylinder, having a wheel brake cylinder and having a multiple piston pump which is constructed from an even number of hydraulic pumps, the suction side of which is connected to the main brake cylinder and to the delivery side of which the wheel brake cylinder is connected, **characterized in that** the hydraulic pumps in each case have a step piston (68), **in that** an inlet valve (78) of the hydraulic pump is integrated into the step piston (68), **in that** an outlet valve (80) of the hydraulic pump is connected to a displacement space (74), and **in that** the step pistons (68) of the multiple piston pump (42) are driven in a dephased but not antiphase manner.

2. Hydraulic vehicle brake system according to Claim 1, **characterized in that** the step pistons (68) are driven with a phase offset of approximately n divided by the number of step pistons (68) or a multiple thereof, but not with a phase shift of n.

3. Hydraulic vehicle brake system according to Claim 1 or 2, **characterized in that** the vehicle brake system is a single-circuit brake system having a multiple piston pump (42) which has at least two step pistons (68).

4. Hydraulic vehicle brake system according to Claim 1 or 2, **characterized in that** the vehicle brake system (10) is a multiple brake system having a multiple piston pump (42) which has at least one step piston (68) for every brake circuit (I, II).

5. Hydraulic vehicle brake system according to Claim 4, **characterized in that** the brake circuits (I, II) have a pressure compensation means (16).

6. Hydraulic vehicle brake system according to Claim 5, **characterized in that** the brake circuits (I, II) are connected to a multiple circuit main brake cylinder (12) which has at least one floating piston (16).

7. Hydraulic vehicle brake system according to one of Claims 1 to 6, **characterized in that** the step pistons (68) have an approximately identical suction volume during a delivery stroke as in a return stroke.

8. Hydraulic vehicle brake system according to Claim 4, **characterized in that** step pistons (68) of the multiple piston pump (42) which follow one another are connected to different brake circuits (I, II).

9. Hydraulic vehicle brake system according to one of the preceding claims, **characterized in that** the vehicle brake system (10) has a changeover valve (28), via which the delivery side of the multiple piston pump (42) is connected to the main brake cylinder (12).

10. Hydraulic vehicle brake system according to one of the preceding claims, **characterized in that** the vehicle brake system (10) has an intake valve (54) which is connected between the suction side of the multiple piston pump (42) and the main brake cylinder (12).

11. Hydraulic vehicle brake system according to one of the preceding claims, **characterized in that** the vehicle brake system (10) has a brake pressure modulation valve arrangement (34, 38).

## Revendications

1. Installation de freinage hydraulique pour véhicule comportant un cylindre de frein principal, un cylindre de frein de roue, ainsi qu'une pompe à plusieurs pistons construite à partir d'un nombre pair de pompes hydrauliques et dont le côté aspiration est raccordé au cylindre de frein principal, alors que le cylindre de frein de roue est raccordé à son côté refoulement,
**caractérisée en ce que**
chacune des pompes hydrauliques comporte un piston étagé (68), les pistons étagés (68) intégrent une soupape d'admission (78) de la pompe hydraulique, une soupape d'échappement (80) de la pompe hydraulique est raccordée à une chambre de refoulement (74) et un entraînement des pistons à gradin (68) de la pompe à plusieurs pistons (42) s'effectue de manière déphasée, mais non pas en opposition de phase.

2. Installation de freinage hydraulique pour véhicule selon la revendication 1,
**caractérisée en ce que**
l'entraînement des pistons étagés (68) s'effectue avec un déphasage à peu près égal à π divisé par le nombre de pistons détagés (68) ou à un multiple de cette valeur, mais non pas avec un déphasage égal à π.

3. Installation de freinage hydraulique pour véhicule selon la revendication 1 ou 2,
**caractérisée en ce qu'**
elle est à circuit unique avec une pompe à plusieurs pistons (42) comportant au moins deux pistons étagés (68).

4. Installation de freinage hydraulique pour véhicule selon la revendication 1 ou 2,
**caractérisée en ce que**
l'installation de freinage pour véhicule (10) est à plusieurs circuits avec une pompe à plusieurs pistons (42) comportant au moins un piston étagé (68) pour chaque circuit de freinage (I, II).

5. Installation de freinage hydraulique pour véhicule selon la revendication 4,
**caractérisée en ce que**
les circuits de freinage (I, II) comportent un équilibrage de pression (16).

6. Installation de freinage hydraulique pour véhicule selon la revendication 5,
**caractérisée en ce que**
les circuits de freinage (I, II) sont raccordés à un cylindre de frein principal à plusieurs circuits (12) qui comporte au moins un piston flottant (16).

7. Installation de freinage hydraulique pour véhicule selon la revendication 1 à 6,
**caractérisée en ce que**
les pistons étagés (68) comportent à peu près le même volume d'aspiration pour une course d'aller que pour une course de retour.

8. Installation de freinage hydraulique pour véhicule selon la revendication 4,
**caractérisée en ce que**
des pistons étagés successifs (68) de la pompe à plusieurs pistons (42) sont raccordés à différents circuits de freinage (I, II).

9. Installation de freinage hydraulique pour véhicule selon l'une des revendications précédentes,
**caractérisé en ce que**
l'installation de freinage pour véhicule (10) comporte une vanne d'inversion (28) par l'intermédiaire de laquelle le côté refoulement de la pompe à plusieurs pistons (42) est raccordé au cylindre de frein principal (12).

10. Installation de freinage hydraulique pour véhicule selon l'une des revendications précédentes,
**caractérisé en ce que**
l'installation de freinage pour véhicule (10) comporte une soupape d'aspiration (54) intercalée entre le côté aspiration de la pompe à plusieurs pistons (42) et le cylindre de frein principal (12).

11. Installation de freinage hydraulique pour véhicule selon l'une des revendications précédentes,
**caractérisé en ce que**
l'installation de freinage pour véhicule (10) comporte un agencement de soupapes de modulation de pression de freinage (34, 38).
